# EUROPEAN PATENT APPLICATION

(11) **EP 1 229 478 A2**
(43) Date of publication of application: **07.08.2002**
(21) Application number: 02250493.0
(22) Date of filing: 24.01.2002
(51) Int. Cl.: G06F 17/60

(54) **Electronic commerce system commodity fit judgement apparatus, and commodity fitness judgement method**

(30) Priority: 24.01.2001 JP 2001016135; 08.01.2002 JP 2002001515
(71) Applicant: Sony Computer Entertainment Inc., Tokyo 107-0052 (JP)
(72) Inventor: Kunigita, Hisayuki c/o Sony Computer Entertainment, Tokyo 107-0052 (JP)
(74) Representative: Turner, James Arthur

(57) **Abstract**

An electronic commerce system having a commodity fitness judgment capability includes a server having a database storing size information indicating body sizes of users and a database storing size information indicating commodity sizes, a fitness judgment engine for comparing the size of a commodity designated by a user with the body size of the user, a user terminal for checking the comparison result, and a graphics engine for generating an image to be displayed by generating a two-dimensional or three-dimensional image of a body of the user in accordance with the body size of the user, superimposing an object of the commodity on the object of the user, and mapping a texture of the commodity selected by the user onto the object of the commodity.

## Description

This invention relates to electronic commerce and to commodity fitness judgement.

Conventionally, when a user purchases something to put on via a Web system, the user has to determine whether the commodity fits him/her on the basis of a small amount of information indicating the size of the commodity, such as S (small), M (medium), L (large), size 5, size 7, size 9, and so on.

In the case where a commodity is purchased via a Web system (an electronic commerce system) after making a decision only on the basis of such a small amount of information, there is a possibility that a commodity delivered to the user does not fit him/her. Thus, there is a possibility that a purchaser has to do a troublesome job to send it back to a seller. In this case, a trouble may occur between the purchaser and the seller.

Various respective aspects and features of the invention are defined in the appended claims. Features from the dependent claims may be combined with features of the independent claims as appropriate and not merely as explicitly set out in the claims.

Embodiments of the present invention can provide a system that allows a user to obtain, via Web, detailed information of a commodity such as clothing or shoes which the user puts on.

An electronic commerce system having a commodity fitness judgment capability according to an aspect of the present invention includes: a terminal operated by a user; and a server connected to the terminal via a network; wherein the server includes: a first database including size information indicating the body size of the user; a second database including size information indicating the size of a commodity; a unit for acquiring the size information indicating the body size of the user from the first database; a unit for acquiring the size information indicating the size of a particular commodity designated by the user from the second database; a comparison unit for comparing the size of the particular commodity with the body size of the user; and a notification unit for notifying the terminal of a result of the comparison.

In this electronic commerce system having the commodity fitness judgment capability according to the present invention, the comparison unit may include a unit for calculating the difference between the size of the particular commodity and the body size of the user; and a unit for determining, on the basis of the difference, an index indicating the degree to which the particular commodity fits the body of the user and employing the resultant index as the result of the comparison.

The electronic commerce system having the commodity fitness judgment capability according to the present invention may further include a storage device connected to the server via the network or a cable, wherein the server may further include a unit for acquiring an object associated with the body of the user and an object associated with the particular commodity from the storage device; an image generation unit for generating a display image by combining the object associated with the body of the user and the object associated with the commodity; and a display unit for supplying the display image to the terminal to display the display image on a screen of the terminal.

In this electronic commerce system having the commodity fitness judgment capability according to the present invention, the image generation unit may include a unit for mapping a texture associated with the commodity onto the object of the commodity.

In this electronic commerce system having the commodity fitness judgment capability according to the present invention, the display unit may supply display images to terminals of a plurality of users to display the display images on screens of respective terminals simultaneously.

In this electronic commerce system having the commodity fitness judgment capability according to the present invention, the server may further include a viewpoint changing unit for changing the viewpoint associated with at least one of the object of the user and the object of the commodity.

The electronic commerce system having the commodity fitness judgment capability according to the present invention may further include a storage device connected to the server via the network or a cable, wherein the server may further include an object generation unit for generating a 2-dimensional or 3-dimensional object of the user on the basis of the body size of the user; a unit for acquiring the object of the particular commodity from the storage device; an image generation unit for generating a display image by combining the object associated with the body of the user and the object associated with the commodity; and a unit for supplying the display image to the terminal to display the display image on a screen of the terminal.

The electronic commerce system having the commodity fitness judgment capability according to the present invention may further include a storage device connected to the terminal via the network or a cable, wherein the terminal may include a display screen; a unit for acquiring an object associated with the body of the user and an object associated with the particular commodity from the storage device; an image generation unit for generating a display image by combining the object associated with the body of the user and the object associated with the commodity; and a unit for displaying the display image on the display screen.

In the electronic commerce system having the commodity fitness judgment capability according to the present invention, the terminal may be a mobile communication terminal.

An electronic commerce system according to another aspect of the present invention includes: a terminal operated by a user; a first database including size information indicating the body size of the user; a second database including size information indicating the size of a commodity; a unit for acquiring the size information indicating the body size of the user from the first database; a unit for acquiring the size information indicating the size of a particular commodity designated by the user from the second database; a comparison unit for comparing the size of the particular commodity with the body size of the user; and a notification unit for notifying the terminal of a result of the comparison.

A commodity fitness judgment apparatus according to still another aspect of the present invention includes: a first database including size information indicating a body size of a user; a second database including size information indicating the size of a commodity; a unit for acquiring the size information indicating the body size of the user from the first database; a unit for acquiring the size information indicating the size of a particular commodity designated by the user from the second database; a comparison unit for comparing the size of the particular commodity with the body size of the user; and a notification unit for notifying the user of a result of the comparison.

In this commodity fitness judgment apparatus according to the present invention, the comparison unit may include a unit for calculating the difference between the size of the particular commodity and the body size of the user; and a unit for determining, on the basis of the difference, an index indicating the degree to which the particular commodity fits the body of the user and employing the resultant index as the result of the comparison.

The commodity fitness judgment apparatus according to the present invention may further include a unit for acquiring an object associated with the body of the user and an object associated with the particular commodity from a storage device connected to the commodity fitness judgment apparatus via a cable or a network; an image generation unit for generating a display image by combining the object associated with the body of the user and the object associated with the commodity; and a display unit for supplying the display image to the terminal operated by the user to display the display image on a screen of the terminal.

In this commodity fitness judgment apparatus according to the present invention, the image generation unit may include a unit for mapping a texture associated with the commodity onto the object of the commodity.

In this commodity fitness judgment apparatus according to the present invention, the display unit may supply display images to terminals of a plurality of users to display the display images on screens of respective terminals simultaneously.

The commodity fitness judgment apparatus according to the present invention may further include a viewpoint changing unit for changing the viewpoint associated with at least one of the object of the user and the object of the commodity.

The commodity fitness judgment apparatus according to the present invention may further include an object generation unit for generating a 2-dimensional or 3-dimensional object of the user on the basis of the body size of the user; a unit for acquiring an object associated with the particular commodity from a storage device connected to the commodity fitness judgment apparatus via a cable or a network; an image generation unit for generating a display image by combining the object associated with the body of the user and the object associated with the commodity; and a unit for supplying the display image to the terminal operated by the user to display the display image on a screen of the terminal.

The commodity fitness judgment apparatus according to the present invention may further include a unit for connecting the commodity fitness judgment apparatus to a network; and a unit for allowing the commodity fitness judgment apparatus to function as a server.

A commodity fitness displaying apparatus according to still another aspect of the present invention includes: a display screen; a unit for acquiring size information indicating a body size of a user from a first database connected to the commodity fitness displaying apparatus via a cable or a network; a unit for acquiring size information indicating the size of a particular commodity designated by the user from a second database connected to the commodity fitness displaying apparatus via a cable or a network; a comparison unit for comparing the size of the particular commodity with the body size of the user; and a unit for displaying a result of the comparison on the display screen.

The commodity fitness displaying apparatus according to the present invention may further include a unit for acquiring an object associated with the body of the user and an object associated with the particular commodity from a storage device connected to the commodity fitness displaying apparatus via a cable or a network; a unit for generating a display image by combining the object associated with the body of the user and the object associated with the commodity; and a unit for displaying the display image on the display screen.

The commodity fitness displaying apparatus according to the present invention may further include a unit for storing purchase history information.

A commodity fitness judgment method for assisting, using a computer, a user in purchasing a commodity, according to still another aspect of the present invention includes the steps of: acquiring size information indicating a body size of the user from a first database; acquiring size information indicating the size of a particular commodity designated by the user from a second database; comparing the size of the particular commodity with the body size of the user; and transmitting a message indicating a result of the comparison to a terminal operated by the user.

In this commodity fitness judgment method according to the present invention, the size comparison step may further include the steps of: calculating the difference between the size of the particular commodity and the body size of the user; and determining, on the basis of the difference, an index indicating the degree to which the particular commodity fits the body of the user and employing the resultant index as the result of the comparison.

The commodity fitness judgment method according to the present invention may further include the steps of: acquiring an object associated with the body of the user and an object associated with the particular commodity from a storage device; generating a display image by combining the object associated with the body of the user and the object associated with the commodity; and supplying the display image to the terminal to display the display image on a screen of the terminal.

The commodity fitness judgment method according to the present invention may further include the step of, when receiving from the user a request for purchasing a commodity, producing information needed to make an arrangement for delivering the commodity to the user.

In this commodity fitness judgment method according to the present invention, the size comparison step may make a size comparison for a plurality of parts of the body of the user.

An electronic commerce system according to still another aspect of the present invention includes: a terminal operated by a user; a storage device for storing an object of the body of the user and an object of a commodity; a unit for acquiring, from the storage device, an object associated with the body of the user and an object associated with a particular commodity designated by the user; an image generation unit for generating a display image by combining the object associated with the body of the user and the object associated with the commodity; and a display unit for supplying the display image to the terminal to display the display image on a screen of the terminal.

A commodity fitness judgment apparatus according to still another aspect of the present invention includes: a unit for acquiring an object associated with a body of a user and an object associated with a particular commodity designated by the user from a storage device connected to the commodity fitness judgment apparatus via a cable or a network; an image generation unit for generating a display image by combining the object associated with the body of the user and the object associated with the commodity; and a display unit for supplying the display image to the terminal operated by the user to display the display image on a screen of the terminal.

A commodity fitness judgment method for assisting, using a computer, a user in purchasing a commodity, according to still another aspect of the present invention includes the steps of: acquiring, from a storage device, an object associated with the body of the user and an object associated with a particular commodity designated by the user; generating a display image by combining the object associated with the body of the user and the object associated with the commodity; and supplying the display image to the terminal operated by the user to display the display image on a screen of the terminal.

The invention will now be described by way of example with reference to the accompanying drawings, throughout which like parts are referred to by like references, and in which:
Fig. 1 is a block diagram illustrating an electronic commerce system according to an embodiment of the present invention;
Fig. 2 is a diagram used to explain a commodity information database;
Fig. 3 is a diagram used to explain a user information database;
Fig. 4 is a diagram used to explain a purchase history;
Fig. 5 is a conversion table used to explain the correspondence between a difference and a degree-of-fitness value;
Fig. 6 is a diagram used to explain an example of a browser screen used to select a commodity;
Fig. 7 is a diagram illustrating an example of a browser screen used to display a comparison result; and
Fig. 8 is a flow chart illustrating a process of judging fitness of a commodity.

The present invention is described in further detail below with reference to preferred embodiments in conjunction with the accompanying drawings.

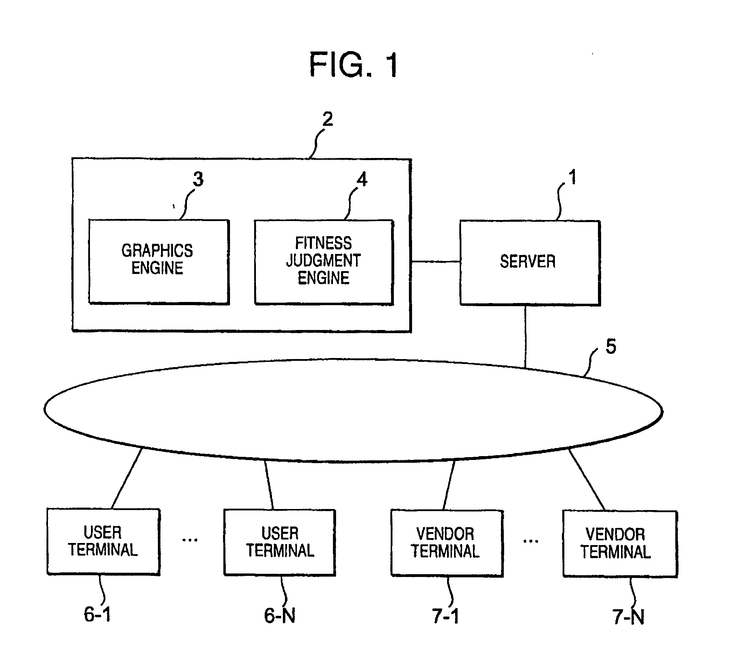

Fig. 1 is a block diagram illustrating an electronic commerce system according to an embodiment of the present invention. As shown in Fig. 1, a server 1 is connected to user terminals 6-1 to 6-N and vendor terminals 7-1 to 7-N via a network 5. A processor 2 including a graphics engine 3 and a fitness judgment engine 4 is connected to the server 1. The processor 2 or one of the graphic engine 3 and the fitness judgment engine 4 may be disposed inside the server 1.

The server 1 supplies to the graphics engine 3 object data of a user (vertex coordinate information of polygons representing the whole shape of the user from the top of the head to the ends of feet), viewpoint information indicating the viewpoint from which the object of the user is viewed, an object data of a commodity, texture data, and an enlargement factor. In accordance with the information supplied from the server 1, the graphics engine 3 generates an image obtained by combining an image of the object of the user and an image of the commodity such as clothing. More specifically, the graphics engine 3 generates a 2-dimensional or 3-dimensional image representing a virtual image of the user wearing the commodity such as clothing.

The factor is information indicating the enlargement factor by which the object data or the texture data of the commodity is enlarged depending upon the size of the commodity. More specifically, if a user designates a certain size (for example a S (small) size) for clothing, the object data of the clothing is enlarged by a factor corresponding to the designated size, and the texture data is cut depending upon the size. The object data of the clothing is superimposed on the object of the user, and the texture data is mapped onto the object data of the clothing. The object data includes vertex coordinates (X, Y, Z) of a large number of polygons, and the coordinates are changed in accordance with the factor.

The fitness judgment engine 4 calculates the difference between the size information indicating the user's body size described in the user information database stored in the server 1 and the size information that is described in the commodity information database and that indicates the size of the commodity selected by the user, and the fitness judgment engine 4 determines the degree-of-fitness value on the basis of the calculated difference. The degree-of-fitness value is an index indicating the degree to which the commodity fits the body of the user, and the degree-of-fitness value is determined by applying the calculated difference to the conversion table or by applying the difference to a predetermined formula.

The user terminals 6-1 to 6-N are used to check and view on the display the degree-of-fitness value supplied from the server 1 and the avatar of the user, that is, the image of the object of the user, input the size of the body of the user, and issue a request for purchasing a commodity. Any of the user terminals 6-1 to 6-N may be realized by a personal computer or a mobile communication terminal (such as a portable telephone).

The vendor terminal 7-1 to 7-N are used by respective vendors to register size data of a commodity and object data of the commodity or image information, taken via a digital camera or the like, of the commodity as texture information into the server 1. An order issued by a user is transmitted to a vendor via the server 1 and a corresponding one of the vendor terminals 7-1 to 7-N.

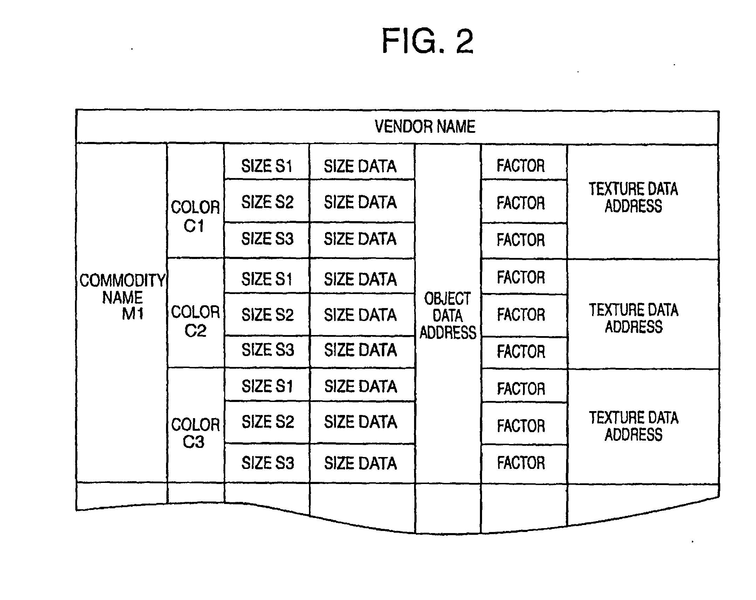

Fig. 2 illustrates an example of a commodity information database. All those data described above are stored in the server 1 via the vendor terminals 7-1 to 7-N. As can be seen from the example shown in Fig. 2, the commodity information database includes data indicating, for each commodity, a commodity name M1, colors C1 to CN, sizes S1 to S3, size data, an object data address indicating an object of a commodity such as clothing, an enlargement factor, and a texture data address. The object data address and the texture data address indicate addresses of the object data and the texture data, respectively, on a storage device of the server 1 such as a hard disk drive, an MO (magneto-optical disk) and a memory device. One object data and one object data address are assigned to each commodity, while one texture data and one texture data address are assigned to each color. This means that one texture data is used for each color. The texture data is cut out so as to have a size corresponding to the size of the object and mapped onto the object.

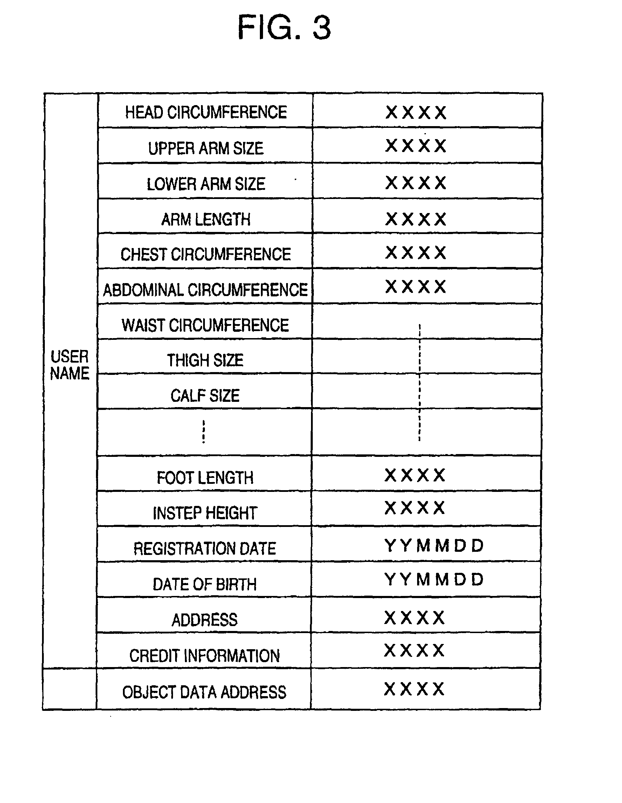

Fig. 3 illustrates an example of the user information database. All those data described above are stored in the server 1 via the vendor terminals 6-1 to 6-N. As can be seen from the example shown in Fig. 3, the user information database includes data indicating the head circumference, the size of the upper arms, the size of the forearms, the length of the arms, the chest circumference, the abdominal circumference, the waist circumference, the thigh size, the calf size,....., the foot length, the instep height, the registration date, the date of birth, the user address, the credit information, and the address of the object data or which is the avatar of the user. That is, the user information database includes size data indicating the sizes of main parts of the body of the user.

In Fig. 2, the size data of the commodity includes data indicating the sizes of the parts corresponding to various parts from the head circumference to the instep height shown in Fig. 3. When a commodity is a hat, the size data include data indicating the head circumference. In the case of clothing that is worn on the upper part of a user's body, the size data includes data indicating the upper arm size, the forearm size, the chest circumference, and the abdominal circumference. For clothing that is worn on the lower part of a user's body, the size data includes data indicating the waist circumference, the thigh size, and the calf size. For shoes, socks, or the like, the size data includes data indicating the foot length and the instep height. By describing size data of a commodity and size data of a user's body such that they correspond in a one-to-one fashion to each other, it becomes possible to calculate the degree-of-fitness value for each part of the user's body.

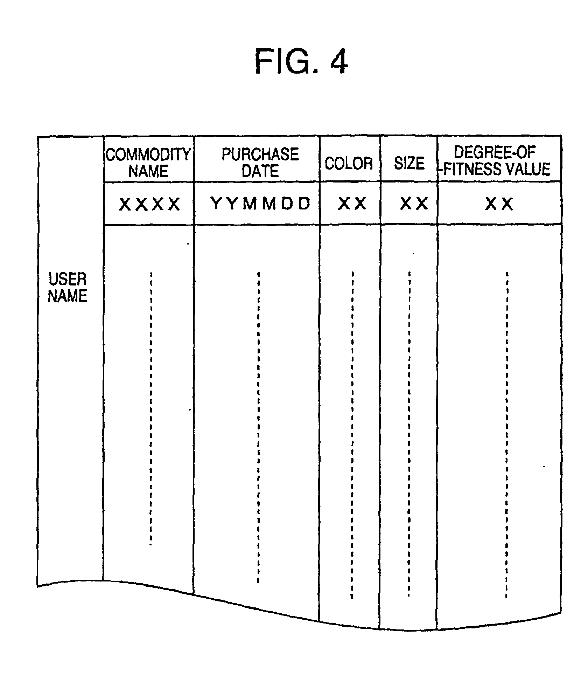

Fig. 4 illustrates an example of the history of purchases made by a user. The purchase history is stored not only in the server 1 but also in the user terminals 6-1 to 6-N. This allows users of the respective user terminals 6-1 to 6-N to view their own purchase history whenever they want to view it. The purchase history includes data indicating a commodity name, a purchase date, a color, a size (S (small), M (medium), L (large)) and a degree-of-fitness value.

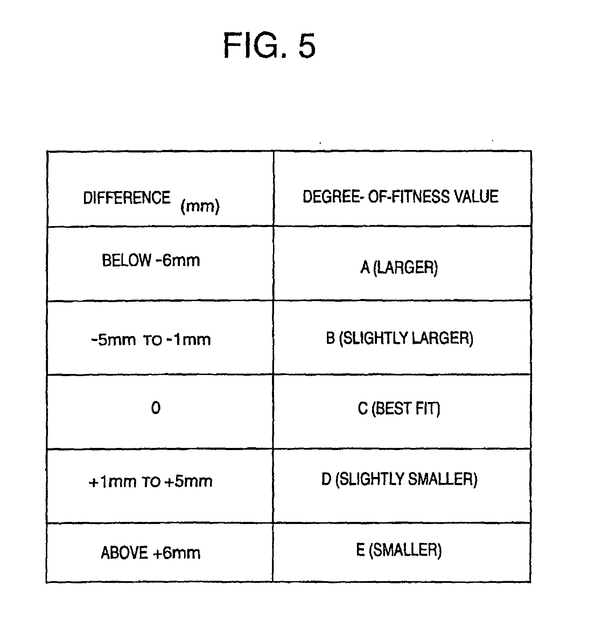

Fig. 5 shows a table used to determine the degree-of-fitness value from the differences between the sizes of various parts of a user's body and the sizes of the corresponding parts of a commodity. This table is stored in the processor 2, and the processor 2 can determine the degree-of-fitness value by performing a simple calculation of subtraction and referring to the table. More specifically, the processor 2 subtracts the sizes of various parts of a commodity selected by a user from the sizes of the corresponding parts of the user's body. If the difference obtained as the result of the subtraction is lower than -6 mm, the processor 2 selects "A" as the degree-of-fitness value to indicate that the size of the commodity is greater than the body size. That is, in this case, the degree-of-fitness value indicates that the size of a certain part of the commodity selected by the user is greater than the size of the corresponding part of the user's body by 6 mm. Similarly, when the difference is within the range from -5 mm to -1 mm, "B" is employed as the degree-of-fitness value to indicate that the size of the commodity is slightly greater than the body size. When the difference is equal to zero, "C" is employed to indicate that the size of the commodity is equal to the body size. In the case where the difference is within the range from +1 mm to +5 mm, "D" is employed to indicate that the size of the commodity is slightly smaller than the body size. When the difference is equal to or greater than +6 mm, "E" is employed as the degree-of-fitness value to indicate that the size of the commodity is smaller than the body size. The determined degree-of-fitness value is transmitted to the user's terminal (one of the user terminals 6-1 to 6-N) so that the user can determine on the basis of the received degree-of-fitness value whether the commodity such as clothing fits the user, without having to actually wear the clothing.

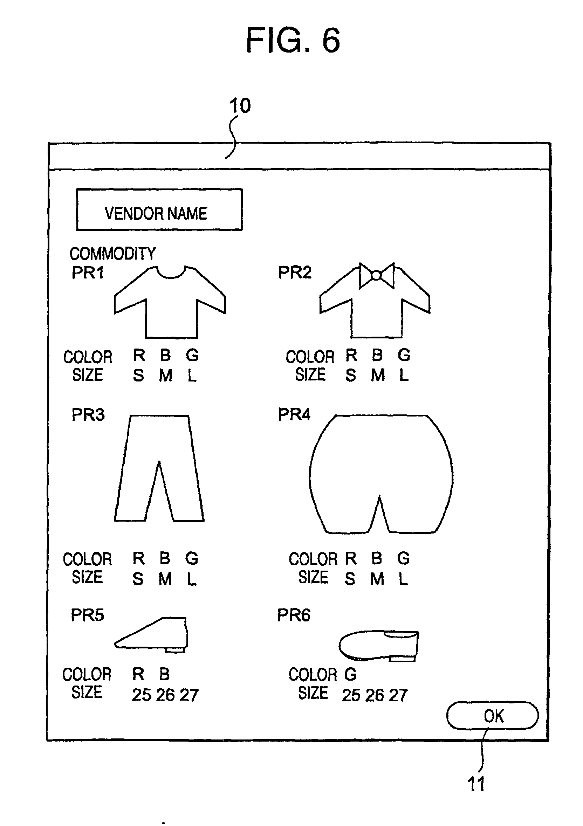

Fig. 6 is a diagram illustrating an example of a browser screen 10 used to select a commodity. As shown in Fig. 6, icons corresponding to commodities PR1 to PR6 are displayed on the browser screen 10, and small buttons for designating colors and sizes are disposed below the respective icons. If the user clicks (points to) an icon of a commodity PR1 (shirt), then the commodity PR1 is selected. If the user further clicks (points to) an "R" button of color buttons to specify a desired color and clicks an "M" button of size buttons to specify a desired size, data indicating the selected commodity, color, and size are stored in the memory of the server 1. When a color button is clicked, the color of the corresponding icon changes to the specified color.

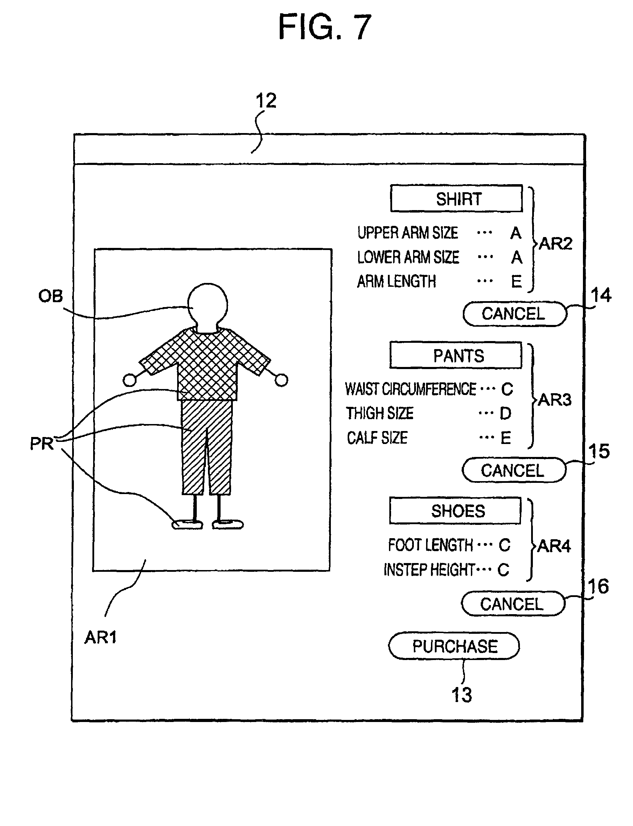

After specifying the commodity such as pants or shoes, the color, and the size thereof, if the user clicks an "OK" button 11, the data indicating the selection made by the user is transmitted to the server 1. The server 1 reads information corresponding to the selection made by the user from the commodity information database and the user information database, and further reads corresponding image information from the storage device based on the read information. The information read is supplied to the processor 2. The processor 2 produces an image on the basis of the supplied information, using the graphics engine 3. Furthermore, the processor 2 makes a comparison in terms of size using the comparison engine 4. The processor 2 supplies the generated image and the comparison result to the server 1. The server 1 supplies the received information to a corresponding one of the user terminals 6-1 to 6-N. As a result, a browser screen such as that shown in Fig. 7 is displayed on the corresponding one of the user terminals 6-1 to 6-N.

Fig. 7 illustrates an example of the browser screen 12 displayed on the display of the user terminals 6-1 to 6-N to allow users to make confirmation. In the area AR1 on the browser screen 12, as shown in Fig. 7, an image of an avatar is displayed to show how the commodity selected by the user will be worn on the user's body. More specifically, the object data of the commodity selected by the user is superimposed on the object OB generated by the graphics engine 3 of the processor 2 in accordance with the size information of the body size of the user, the texture data PR is mapped onto the object data of the commodity, and the image represented by the resultant data is displayed.

In an area AR2, the degree-of-fitness values of the shirt selected by the user are displayed, that is, the values indicating the degree to which the shirt fits the sizes of the upper parts of the user's body are displayed. Similarly, in an area AR3, the degree-of-fitness values of the pants selected by the user are displayed to indicate the degree to which the pants fit the sizes of the lower parts of the body of the user. .In an area AR4, the degree-of-fitness values of the shoes selected by the user are displayed to indicate the degree to which the shoes fit the foot sizes of the user. In this specific example shown in Fig. 7, the comparison result indicating that the shirt is larger, the pants are slightly smaller, and the shoes have a correct size is displayed.

After confirming that the sizes are correct, if the user clicks the "purchase" button 13, a purchase order is issued. In respective areas AR2, AR3, and AR4, cancel buttons 14, 15, and 16 are disposed to allow the user to cancel the current selection and to change the commodity to another one. When one of these cancel buttons is clicked, the user is allowed to select another commodity.

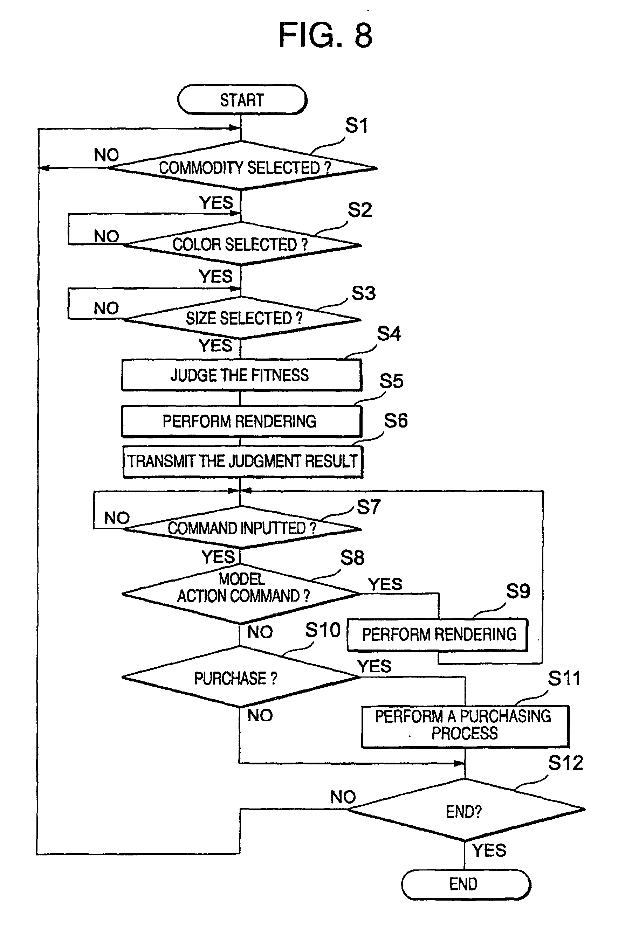

Now, referring to a flow chart shown in Fig. 8, a commodity fitness judgment process and a commercial transaction process will be descried.

In step S1, the server 1 determines whether a command has been issued from some of user terminals 6-1 to 6-N to select a commodity. If "yes", the process proceeds to step S2. In step S2, the server 1 determines whether a command has been issued from some of user terminals 6-1 to 6-N to select a color. If "yes", the process proceeds to step S3. In step S3, the server 1 determines whether a command has been issued from some of user terminals 6-1 to 6-N to select a size. If "yes", the process proceeds to step S4.

In step S4, the server 1 retrieve the size data of the commodity selected by the user from the commodity information database shown in Fig. 2 and retrieves the size data of the user from the user information database shown in Fig. 3. Both of the retrieved size data are supplied to the processor 2. In response, the fitness judgment engine 4 of the processor 2 calculates the differences between the size data of the user and the size data of the commodity and determines, based on the calculated difference, the degree-of-fitness values in accordance with the table shown in Fig. 5. The result is supplied to the server 1.

In step S5, the server 1 retrieves, from the commodity information database shown in Fig. 2, the object data address corresponding to the commodity such as clothing selected by the user, the enlargement factor corresponding to the specified size of the commodity, and the texture data address corresponding to the specified color of the commodity. Furthermore, the server 1 acquires, from the storage device, the object data at the object data address and the texture data of the commodity at the texture data address. Thereafter, the server 1 retrieves the object data address of the object of the user from the user information database shown in Fig. 3 and acquires the object data of the object of the user stored at the object data address in the storage device. The server 1 supplies the retrieved texture data and object data to the processor 2.

The graphics engine 3 of the processor 2 enlarges the object data of the clothing by the enlargement factor and superimposes the resultant object data on the object data of the user. Furthermore, the graphics engine 3 cuts the texture data into a size corresponding to the enlargement factor and maps the resultant texture data onto the above data generated from the object data of the user and the object data of the clothing thereby generating a display image. The generated display image is supplied to the server 1. In the case where object data of the user or the commodity is not supplied from the server 1 to the graphics engine 3, the graphics engine 3 acquires the size data of the user's body and the size data of the commodity from the server 1 and generates object data represented by polygon vertex coordinates in accordance with the acquired size data. The generated object data are supplied therefrom to the server 1. The server 1 stores the received object data into the storage device and registers their addresses in the commodity information database shown in Fig. 2 and the user information database shown in Fig. 3. Instead of storing the object data, the graphics engine 3 may generate object data each time object data is needed.

In step S6, the server 1 transmits the determined degree-of-fitness values for various parts together with the display image data to the corresponding one of the user terminals 6-1 to 6-N so that a confirmation screen is displayed, as shown in Fig. 7, on the display of the user terminal.

In step S7, the server 1 determines whether or not any command has been issued from some of the user terminals 6-1 to 6-N. If "yes", the process proceeds to step S8. In step S8, the server 1 determines whether or not the command issued by the user is a model action command. If "yes", the process proceeds to step S9. However, if "no", the process jumps to step S10.

In step S9, the graphics engine 3 performs a viewpoint change rendering processing to change the current viewpoint into a viewpoint designated by the user via a controller of his/her user terminal (one of the user terminals 6-1 to 6-N). More specifically, the graphics engine 3 extracts coordinates of the object image that can be seen from the new viewpoint, converts a 3-dimensional image into a 2-dimensional perspective view, and performs a calculation associated with lighting. Alternatively, the object image may be simply moved. In this case, the respective coordinates of the object data are simply changed by values corresponding to the movement amounts of portions of the object specified by the user via the controller or the like. After completion of step S9, the process returns to step 7.

In step S10, it is determined whether the "purchase" button 13 or any one of the "cancel" buttons 14 to 16 shown in Fig. 7 has been clicked. If it is determined that the "purchase" button 13 has been clicked, the process proceeds to step S11. In the case where it is determined that some of the "cancel" buttons 14 to 16 has been clicked, the process jumps to step S12.

In step S11, the server 1 supplies information, stored in the memory of the server 1, of the commodity selected by the user to a corresponding one of the vendor terminals 7-1 to 7-N via the network 5. In response, a preparation or arrangement for delivering. the commodity is made. Thus, the commodity is delivered from the vendor to the user.

In step S12, the server 1 determines whether an end command has been issued by the user or the user terminal has been logged out. If "yes", the process shown in the flow chart of Fig. 8 is ended. However, if "no", the process returns to step S1. In the case where the process returns to step S1, the selection screen such as that shown in Fig. 6 is displayed.

As described above, in the present embodiment, the user can select a commodity that well fits the user without having to actually wear the commodity and thus it is possible to prevent a troublesome job to send the commodity back to a vendor or a trouble in sending back the commodity.

Note that the commodity fitness judgment process and the commercial transaction process described above with the reference to the flow chart are mere examples. That is, in steps S1 to S3, it is assumed that one commodity is selected. In the case where two or more different types of commodities are selected or two or more commodities that are the same in type but that are different in size or color are selected or a selection is made in a mixed fashion, the processings in steps S1 to S3 are performed repeatedly until it is determined that all desired commodities have been selected. After that, the process proceeds to step S4.

The selection of commodities and the determination of the fitness may be performed simultaneously for a plurality of users, and virtual images of the plurality of users may be displayed simultaneously on the displays of the corresponding user terminals 6-1 to 6-N.

In the embodiments described above, the generation of images is performed by the processor 2. Alternatively, the generation of images may be performed by the user terminals 6-1 to 6-N. In this case, object data and text data are transmitted from the server 1 to user terminals 6-1 to 6-N.

Not only information indicating the commodity size but also information of other items such as the material of a commodity or its elasticity may be stored in the server 1, and the degree-of-fitness value may be modified depending on the material or the elasticity.

The server 1, the processor 2, the device for storing the object data of commodities and the size data thereof, the device for storing the object data of users and size data thereof, and the terminal 4 may be connected to each other via the network 3.

As described above, the present invention provides a system that allows a user to confirm, via Web, that a commodity such as clothing or shoes selected by the user satisfies conditions specified by the user.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An electronic commerce system having a commodity fitness judgment capability, comprising:
a terminal operated by a user; and
a server connected to the terminal via a network, wherein the server comprises:
a first database including size information indicating a body size of the user;
a second database including size information indicating the size of a commodity;
a unit for acquiring the size information indicating the body size of the user from the first database;
a unit for acquiring the size information indicating the size of a particular commodity designated by the user from the second database;
a comparison unit for comparing the size of the particular commodity with the body size of the user; and
a notification unit for notifying the terminal of a result of the comparison.

2. An electronic commerce system having a commodity fitness judgment capability according to Claim 1, wherein the comparison unit comprises:
a unit for calculating the difference between the size of the particular commodity and the body size of the user; and
a unit for determining, on the basis of the difference, an index indicating the degree to which the particular commodity fits the body of the user and employing the resultant index as the result of the comparison.

3. An electronic commerce system having a commodity fitness judgment capability according to Claim 1, further comprising
a storage device connected to the server via the network or a cable,
wherein the server further comprises:
a unit for acquiring an object associated with the body of the user and an object associated with the particular commodity from the storage device;
an image generation unit for generating a display image by combining the object associated with the body of the user and the object associated with the commodity; and
a display unit for supplying the display image to the terminal to display the display image on a screen of the terminal.

4. An electronic commerce system having a commodity fitness judgment capability, according to Claim 3, wherein the image generation unit includes a unit for mapping a texture associated with the commodity onto the object of the commodity.

5. An electronic commerce system having a commodity fitness judgment capability according to Claim 3, wherein the display unit supplies display images to terminals of a plurality of users to display the display images on screens of respective terminals.

6. An electronic commerce system having a commodity fitness judgment capability, according to Claim 3, wherein the server further comprises a viewpoint changing unit for changing the viewpoint associated with at least one of the object of the user and the object of the commodity.

7. An electronic commerce system having a commodity fitness judgment capability, according to Claim 1, further comprising
a storage device connected to the server via the network or a cable,
wherein the server further comprises:
an object generation unit for generating a 2-dimensional or 3-dimensional object of the user's body on the basis of the body size of the user;
a unit for acquiring the object of the particular commodity from the storage device;
an image generation unit for generating a display image by combining the object associated with the body of the user and the object associated with the commodity; and
a unit for supplying the display image to the terminal to display the display image on a screen of the terminal.

8. An electronic commerce system having a commodity fitness judgment capability according to Claim 1, further comprising
a storage device connected to the terminal via the network or a cable,
wherein the terminal comprises:
a display screen;
a unit for acquiring an object associated with the body of the user and an object associated with the particular commodity from the storage device;
an image generation unit for generating a display image by combining the object associated with the body of the user and the object associated with the commodity; and
a unit for displaying the display image on the display screen.

9. An electronic commerce system having a commodity fitness judgment capability according to Claim 1, wherein the terminal is a mobile communication terminal.

10. An electronic commerce system comprising:
a terminal operated by a user;
a first database including size information indicating the body size of the user;
a second database including size information indicating the size of a commodity;
a unit for acquiring the size information indicating the body size of the user from the first database;
a unit for acquiring the size information indicating the size of a particular commodity designated by the user from the second database;
a comparison unit for comparing the size of the particular commodity with the body size of the user; and
a notification unit for notifying the terminal of a result of the comparison.

11. A commodity fitness judgment apparatus comprising:
a first database including size information indicating a body size of a user;
a second database including size information indicating the size of a commodity;
a unit for acquiring the size information indicating the body size of the user from the first database;
a unit for acquiring the size information indicating the size of a particular commodity designated by the user from the second database;
a comparison unit for comparing the size of the particular commodity with the body size of the user; and
a notification unit for notifying the user of a result of the comparison.

12. A commodity fitness judgment apparatus according to Claim 11, wherein the comparison unit comprises:
a unit for calculating the difference between the size of the particular commodity and the body size of the user; and
a unit for determining, on the basis of the difference, an index indicating the degree to which the particular commodity fits the body of the user and employing the resultant index as the result of the comparison.

13. A commodity fitness judgment apparatus according to Claim 11, further comprising:
a unit for acquiring an object associated with the body of the user and an object associated with the particular commodity from a storage device connected to the commodity fitness judgment apparatus via a cable or a network;
an image generation unit for generating a display image by combining the object associated with the body of the user and the object associated with the commodity; and
a display unit for supplying the display image to the terminal operated by the user to display the display image on a screen of the terminal.

14. A commodity fitness judgment apparatus according to Claim 13, wherein the image generation unit includes a unit for mapping a texture associated with the commodity onto the object of the commodity.

15. A commodity fitness judgment apparatus according to Claim 13, wherein the display unit supplies display images to terminals of a plurality of users to display the display images on screens of respective terminals simultaneously.

16. A commodity fitness judgment apparatus according to Claim 13, further comprising a viewpoint changing unit for changing the viewpoint associated with at least one of the object of the user and the object of the commodity.

17. A commodity fitness judgment apparatus according to Claim 11, further comprising:
an object generation unit for generating a 2-dimensional or 3-dimensional object of the user's body on the basis of the body size of the user;
a unit for acquiring an object associated with the particular commodity from a storage device connected to the commodity fitness judgment apparatus via a cable or a network;
an image generation unit for generating a display image by combining the object associated with the body of the user and the object associated with the commodity; and
a unit for supplying the display image to the terminal operated by the user to display the display image on a screen of the terminal.

18. A commodity fitness judgment apparatus according to Claim 11, further comprising:
a unit for connecting the commodity fitness judgment apparatus to a network; and
a unit for allowing the commodity fitness judgment apparatus to function as a server.

19. A commodity fitness displaying apparatus comprising:
a display screen;
a unit for acquiring size information indicating a body size of a user from a first database connected to the commodity fitness displaying apparatus via a cable or a network;
a unit for acquiring size information indicating the size of a particular commodity designated by the user from a second database connected to the commodity fitness displaying apparatus via a cable or a network;
a comparison unit for comparing the size of the particular commodity with the body size of the user; and
a unit for displaying a result of the comparison on the display screen.

20. A commodity fitness displaying apparatus according to Claim 19, further comprising:
a unit for acquiring an object associated with the body of the user and an object associated with the particular commodity from a storage device connected to the commodity fitness displaying apparatus via a cable or a network;
a unit for generating a display image by combining the object associated with the body of the user and the object associated with the commodity; and
a unit for displaying the display image on the display screen.

21. A commodity fitness displaying apparatus according to Claim 19, further comprising a unit for storing purchase history information.

22. A method for assisting a user in purchasing a commodity using a computer, comprising the steps of:
acquiring size information indicating a body size of the user from a first database;
acquiring size information indicating the size of a particular commodity designated by the user from a second database;
comparing the size of the particular commodity with the body size of the user; and
transmitting a result of the comparison to the terminal operated by the user.

23. A commodity fitness judgment method according to Claim 22, wherein the size comparison step further comprises the steps of:
calculating the difference between the size of the particular commodity and the body size of the user; and
determining, on the basis of the difference, an index indicating the degree to which the particular commodity fits the body of the user and employing the resultant index as the result of the comparison.

24. A commodity fitness judgment method according to Claim 22, further comprising the steps of:
acquiring an object associated with the body of the user and an object associated with the particular commodity from the storage device;
generating a display image by combining the object associated with the body of the user and the object associated with the commodity; and
supplying the display image to the terminal to display the display image on a screen of the terminal.

25. A commodity fitness judgment method according to Claim 22, further comprising the step of, after receiving from the user a request for purchasing a commodity, producing information needed to make an arrangement for delivering the commodity to the user.

26. A commodity fitness judgment method according to Claim 22, wherein in the size comparison step a size comparison for a plurality of parts of the body of the user is carried out.

27. An electronic commerce system, comprising:
a terminal operated by a user;
a storage device for storing an object of the body of the user and an object of a commodity;
a unit for acquiring, from the storage device, an object associated with the body of the user and an object associated with a particular commodity designated by the user;
an image generation unit for generating a display image by combining the object associated with the body of the user and the object associated with the commodity; and
a display unit for supplying the display image to the terminal to display the display image on a screen of the terminal.

28. A commodity fitness judgment apparatus comprising:
a unit for acquiring an object associated with a body of a user and an object associated with a particular commodity designated by the user from a storage device connected to the commodity fitness judgment apparatus via a cable or a network;
an image generation unit for generating a display image by combining the object associated with the body of the user and the object associated with the commodity; and
a display unit for supplying the display image to the terminal operated by the user to display the display image on a screen of the terminal.

29. A method for assisting a user in purchasing a commodity using a computer, comprising the steps of:
acquiring, from a storage device, an object associated with the body of the user and an object associated with a particular commodity designated by the user;
generating a display image by combining the object associated with the body of the user and the object associated with the commodity; and
supplying the display image to the terminal operated by the user to display the display image on a screen of the terminal.
